(19) Europäisches Patentamt
European Patent Office
Office européen des brevets

(11) Veröffentlichungsnummer: **0 108 376**
**B1**

(12) **EUROPÄISCHE PATENTSCHRIFT**

(45) Veröffentlichungstag der Patentschrift: **04.07.90**

(51) Int. Cl.$^5$: **B 41 C 1/04**

(21) Anmeldenummer: **83110892.3**

(22) Anmeldetag: **02.11.83**

(54) **Verfahren zum ortsgenauen Nachgravieren von Druckzylindern.**

(30) Priorität: **04.11.82 DE 3240654**

(43) Veröffentlichungstag der Anmeldung:
**16.05.84 Patentblatt 84/20**

(45) Bekanntmachung des Hinweises auf die Patenterteilung:
**04.07.90 Patentblatt 90/27**

(84) Benannte Vertragsstaaten:
**AT BE CH DE FR GB IT LI NL SE**

(56) Entgegenhaltungen:
**EP-A-0 053 885**
**DE-A-2 354 732**
**DE-A-2 705 993**
**FR-A-2 438 853**

**APPLIED PHYSICS LETTERS, Band 34, Nr. 5, 1. März 1979, Seiten 310-312, American Institute of Physics, New York, US; R.L. SELIGER et al.: "A high-intensity scanning ion probe with submicrometer spot size"**

(73) Patentinhaber: **DR.-ING. RUDOLF HELL GmbH**
**Grenzstrasse 1-5**
**D-2300 Kiel 14 (DE)**

(72) Erfinder: **Beisswenger, Siegfried**
**Albert-Einstein-Strasse 22**
**D-2308 Preetz (DE)**
Erfinder: **Boppel, Wolfgang**
**Otto-Hahn-Strasse 22**
**D-2308 Preetz (DE)**

**EP 0 108 376 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Verfahren und Einrichtung zum ortsgenauen Nachgravieren von Druckzylindern mittels abgetasteter Marken.

Die vorliegende Erfindung betrifft ein Verfahren und eine Einrichtung zur Durchführung des Verfahrens zum ortsgenauen Nachgravieren von Druckzylindern gemäß dem Oberbegriff der Ansprüche 1 und 2.

Es ist bereits in der DE—C—23 61 903 und in der DE—A—25 13 042 beschrieben, daß in einen bereits teilgravierten Formzylinder nachträglich Vorlagenteile in ganz bestimmten Stellen des Umfangs einer Druckform passergenau nachgraviert werden können. Dieses Problem stellt sich im Magazindruck, wenn z.B. eine Magazinseite einen Anzeigenteil und einen aktuellen Teil enthält. Bereits lange vor Erscheinen des Magazins wird der Anzeigenteil graviert und angedruckt, um dem Auftraggeber einen Andruck zur Qualitätskontrolle vorlegen zu können. Erst kurz vor der Fertigstellung des Magazins wird dann der aktuelle Teil nachgraviert. Entscheidend ist dabei, daß die Nachgravur auf allen Druckzylindern eines Farbsatzes passergenau zur Erstgravur positioniert wird.

In den beiden genannten Schriften sind für die elektromechanische Gravur Lösungen angegeben worden, und zwar dergestalt, daß mittels auf den Abtast- und Gravierzylinder angeordneten ortsfesten Referenzmarken, von denen eine häufig als Nordimpuls bezeichnet wird, da er nur einmal am Umfang des Druckzylinders auftritt, der Winkelversatz zwischen dem Abtast- und Gravierzylinder gemessen wird und von der Spannung des Antriebsmotors für den Gravierzylinder Impulse ausgeblendet oder eingefügt werden, bis der Winkelversatz zu Null wird. Hierzu wird eine mit dem Druckzylinder verbundene Rasterscheibe fotoelektrisch abgetastet, und es wird bei jeder Umdrehung des Zylinders ein Umfangsimpuls, auch Nordimpuls genannt, erzeugt. Außerdem liefert die Rasterscheibe eine Vielzahl von Impulsen, mit denen der Gravurtakt mittels einer PLL-Schaltung erzeugt und synchronisiert wird.

Bei der Elektronenstahlgravur von Druckzylindern ist diese Vorgehensweise nicht möglich, da kein Abtastzylinder vorhanden ist, der sich synchron mit dem Druckzylinder dreht, weil die Gravur offline zu der Abtastung, d.h. aus einem Speicher, betrieben wird. Infolgedessen kann kein Winkelversatz zu dem Abtastzylinder ermittelt werden, der als Kriterium für die Wiedereinphasung ausgewertet werden könnte.

Es ist weiterhin für die Gravur von Tiefdruckzylindern in der DE—A—23 54 732 eine Vorbereitung von Druckflächen beschrieben. Hierbei werden die Druckzylinder, bevor sie mit der Bildinformation graviert werden, einer Vorgravur unterzogen, bei der der gesamte Druckzylinder mit gleich tiefen Näpfchen versehen wird, die anschließend mit Kunststoff gefüllt werden. Zur eingentlichen Gravur wird dieser Zylinder in eine Lasergraviermaschine eingespannt, und der Laser brennt aus den mit Kunststoff gefüllten Näpfchen eine bestimmte Menge Kunststoff aus, wodurch im Kunststoff Näpfchen entstehen, die dann die gewünschte Farbmenge für den Druck aufnehmen.

Bei dieser Art der Gravur besteht die Schwierigkeit, die bereits vorgravierten Näpfchen exakt mit dem Laserstrahl zu treffen. Trifft der Laserstrahl nicht exakt, so wird nicht die gewünschte Menge Kunststoff aus dem vorgefertigten Näpfchen graviert, un die Zentren der Näpfchen liegen nicht genau auf den durch das Druckraster vorgegebenen Stellen auf der Oberfläche der Druckform. Die Folgen sind unerwünschte Interferenzmuster beim Druck, die als Moiré in Erscheinung treten. Außerdem kann eine Variation in der Druckdichte auftreten, je nachdem ob der gravierende Strahl das Füllmaterial im Zentrum des Näpfchens oder nur am Rande des vorgravierten Näpfchens entfernt.

Um dies zu vermeiden, wird ein sogenannter Zellendetektor vorgesehen, der das Vorhandensein einer gefüllten Zelle an einem abgetasteten Punkt der Druckformoberfläche feststellt. Außerdem ist eine Strahlführungseinrichtung vorgesehen, die mit Hilfe des Zellendetektors den Strahl so einstellt, daß er auf die vom Detektor festgestellte zu gravierende Zelle fällt.

Bei der vorliegenden Patentanmeldung liegen aber andere Verhältnisse vor. Es werden nicht vorher gravierte Näpfchen mit einem Füllmaterial gefüllt, sondern der Elektronenstrahl graviert die Näpfchen in die blanke Kupferoberfläche, und zwar in der endgültigen Form und Tiefe. Unter Wiedergravieren ist hier gemeint, daß bei der Erstgravur ein Bereich der Druckformoberfläche frei bleibt, um später einen aktuellen Artikel oder ein Bild aufzunehmen. Zu diesem Zweck wird der Zylinder nochmals in die Graviermaschine eingespannt, und es ist Aufgabe der Erfindung, das Bild in diesem freigebliebenen Teil der Druckformoberfläche wieder genau näpfchengetreu mit dem bereits vorhandenen Raster nachzugravieren. Hierzu werden bei der ersten Gravur eine Reihe Näpfchen infolge einer Näpfchenspur am Rand neben dem bebilderten Teil der Druckform graviert. Der genaue Gravurstart wird mittels einer exakt definierten Lücke innerhalb dieser Näpfchen festgelegt. Die Festlegung des Gravurstarts bzw. Wiederfindung des Gravurstarts hat zur Folge, daß bei der Rotation des Druckzylinders mit konstanter Geschwindigkeit der Datenstrom an das Graviersystem sowohl bei der ersten als auch bei der zweiten Gravur an derselben Stelle eingeschaltet wird, d.h. daß der Gravurbeginn in beiden Fällen gleich ist.

Bei der DE—A—23 54 732 kommt es hierauf nicht an, sondern der Gravierstrahl soll möglichst ortsgenau ein bereits graviertes Näpfchen finden, um das Füllmaterial, das sich in diesem Näpfchen befindet, zu entfernen. Hierbei ist ein genaues Treffen erforderlich, da das druckende Näpfchen nur dadurch entsteht, daß Füllmaterial entfernt wird, nicht aber Material der eigentlichen Druckformoberfläche. Dies bedeutet, falls das gefüllte Näpfchen nicht exakt getroffen wird, daß kleinere Näpfchen graviert werden oder daß die Zentren der gravierten Näpfchen nicht exakt dort liegen, wo sie gemäß des Druckrasters hingehören, so daß beim eigentlichen Druck mit den anderen Druckfarben, d.h. mit den anderen Druckzylindern Interferenzmuster, d.h. Moiréerscheinungen auftreten, und daß eine Tonverfälschung auftritt, je nachdem ob das Näpfchen voll getroffen wird oder weniger genau getroffen wird.

Es kommt bei der vorliegenden Patentanmeldung also nicht auf die reine Synchronisation des Druckzylinders mit dem Gravierstrahl an, sondern es muß gewährleistet sein, daß ausgehend von einer Bezugsmarke die Gravur auf dem Zylinder jederzeit wieder ortsgenau aufgenommen werden kann, ohne daß das vorher gefüllte Näpfchen detektiert und mittels einer Strahlennachführeinrichtung getroffen werden soll.

Der vorliegenden Erfindung liegt daher die Aufgabe zugrunde, ein Verfahren anzugeben, mit dem es ermöglicht wird, unabhängig vom Abtastvorgang, den Graviervorgang bei einer Nachgravur ortsgenau an einer vorgegebenen Stelle der Oberfläche des Gravierzylinders zu starten.

Die Erfindung erreicht dies durch die im kennzeichnenden Teil des Anspruchs 1 angegebenen Merkmale.

Eine Einrichtung zur Durchführung des Verfahrens ist im Anspruch 2 angegeben.

Die Erfindung wird im folgenden anhand der Figuren 1 bis 16 näher erläutert. Es zeigen

Figur 1 eine schematische Darstellung einer Einrichtung zur Durchführung des Verfahrens,

Figur 1a ein detailliertes Blockschaltbild gemäß Figur 1,

Figur 2 eine Darstellung der gravierten Näpfchenspur,

Figur 3 eine Darstellung der örtlichen Zuordnung der Näpfchenspur in nichteingephastem Zustand,

Figur 4 ein Diagramm für die Auswertung der Sensorsignale,

Figur 5a und 5b ein Beispiel für die Sensorsignale—zum Einphasen in Axialrichtung,

Figur 6 eine Näpfchenspur mit Lücken zum Einphasen in Umfangsrichtung,

Figur 7 ein Impulsdiagramm für die Auswertung der einzelnen Impulse zur Einphasung,

Figur 8 ein Ausführungsbeispiel einer Schaltung zur Realisierung des "Meßwiderstandes",

Figur 9 ein Schaltungsbeispiel für einen Maximumdetektor,

Figur 10 eine Schaltung eines Markendetektors,

Figur 10a ein detailliertes Impulsdiagramm zur Figur 10,

Figur 11 eine Schaltung zur Gewinnung des eingephasten Nordimpulses,

Figur 12 ein Flußdiagramm für den Programmablauf des Steuerrechners,

Figur 13 ein Flußdiagramm für den Programmablauf des Schrittmotorrechners,

Figur 14 ein Flußdiagramm für den Programmablauf für das Anfahren der Startposition beim Einphasen,

Figur 15 ein Flußdiagramm für das Unterprogramm "Einphasen in Vorschubrichtung" und

Figur 16 ein Flußdiagramm für das Programm "Umfangseinphasung".

Figur 1 zeigt im Schnitt eine Einrichtung zur Elektronenstrahlgravur von Druckzylindern, die aus einem Vakuumgefäß (1), in dem sich ein Druckzylinder (2) befindet, der in Pfeilrichtung (3) mit der Winkelgeschwindigkeit w von einem nicht dargestellten Antrieb in Drehung versetzt wird. Ein ebenfalls schematisch dargestellter Elektronenstrahlerzeuger (4), in dem eine Elektronenstrahlsonde (5) erzeugt wird, die auf den Zylinder (2) gerichtet ist, schließt an das vakuumdichte Gehäuse (1) an.

In der Praxis sind Graviermaschinen bekannt, bei denen die relative Axialbewegung zwischen Druckzylinder und Graviersystem entweder durch axiales Verschieben des Druckzylinders oder des Graviersystems erreicht wird. Die vorliegende Erfindung kann mit Vorteil bei beiden Antriebsarten angewendet werden.

Der elektronenoptische Aufbau des Elektronenstrahlerzeugers 4 wurde weggelassen und lediglich die Fokusspule 6 eingezeichnet, mit deren Hilfe der Elektronenstrahl auf die Druckformoberfläche fokussiert wird.

Durch Fokussierung und Defokussierung werden die Gravurnäpfchen erzeugt. Die Ansteuerung der Fokusspule (6) erfolgt gemäß DE—A—2947 444 (entspricht US—A—4,393,295), weshalb die Gravursteuerung hier im einzelnen nicht erläutert wird, da es im vorliegenden Falle lediglich auf die Erzeugung der Impulse ankommt, mit denen die Gravur in Axial- und Umfangsrichtung gestartet wird. Zur Gewinnung dieser Impulse wird der Elektronenstrahlerzeuger vor der eigentlichen Gravur auf Meßbetrieb umgeschaltet, was später näher erläutert wird. Von der Druckformoberfläche ausgehende Sekundärelektronen SE und reflektierte Elektronen RE gelangen auf eine ringförmige Blende (7), die über einen Meßwiderstand $R_M$ an Masse liegt. Das von der Blende (7) gelieferte Sensorsignal wird einem Maximumdetektor (8) zugeführt, von dem es nach einer Analog/Digital-Wandlung in einem A/D-Wandler (9) der Schrittmotorsteuerung (10) zugeführt wird. Es ist weiterhin eine Einphaselektronik (11) vorhanden, die einerseits über einen Markendetektor (12) mit der Blende (7) verbunden ist und zum anderen von einer Rasterscheibe (21), welche sich synchron mit dem Druckzylinder (2) dreht, von einer ortsfesten Marke (22), sogenannte Nordimpulse $N_{jo}$ erhält. Außerdem ist die Einphaselektronik (11) mit einer Stufe (23) zur Takterzeugung verbunden, welche die Frequenzen für die Graviersteuerung (24) liefert. Die Einphaselektronik ist—wie auch die Schrittmotorsteuerung (10)—mit einem zentralen Steuerrechner (13) verbunden und liefert an ihrem Ausgang die für die Einphasung erforderlichen Impulse.

Figur 1a zeigt im Prinzip denselben Aufbau wie Figur 1, die Schaltung ist aber in ihren Einzelbausteinen genauer aufgeteilt. Die Schrittmotorsteuerung (10) der Figur 1 besteht aus einem Schrittmotorsteuerrechner (10a), z.B. vom Typ i SBC 80/24 der Firma Intel mit 80 programmierbaren Eingangs-/Ausgangsleitungen und einer Schrittmotor-Leistungsendstufe (10b), Type CD 30 der Firma Phytron, München. Als Schrittmotor (10c) kann z.B. der Schrittmotor, Type ZSH 125-200-15 der Firma Phytron, München, verwendet werden.

Die Schrittmotor-Leistungsendstufe (10b) ist über eine Taktleitung $\phi$, eine Vor- Rück- Steuerleitung und über eine Status-Leitung mit dem Motorsteuerrechner (10a) verbunden. Der Motorsteuerrechner (10a) steht über eine Datenleitung (91), die z.B. eine 12fach-Leitung sein kann und über eine Steuerleitung (92) mit dem A/D-Wandler (9) in Verbindung. Der Meßwiderstand $R_M$ der Figur 1 ist in Figur 1a als Strom/ Spannungswandler (14) ausgebildet, der später in Figur 8 näher beschrieben ist. Der zentrale Steuerrechner (13), bestehend aus den Bausteinen (13a), Type i SBC 86/12 A und der programmierbaren Schnittstelle (13b), Type i SBC 519 der Firma Intel, ist über einen Datenbus (15), Intel-Multi-Bus IEEE 796, mit dem Schrittmotorsteuerungsrechner (10a) verbunden. Die schaltungstechnischen Einzelheiten der einzelnen Baugruppen werden später anhand der Figuren 8—11 näher erläutert.

Figur 2 zeigt eine Näpfchenspur, wie sie z.B. zu Beginn der Gravur auf den Zylinderrand aufgebracht wird. Diese Näpfchenspur kann auch auf einer Umfangslinie liegen, die nicht am Rand der Druckform graviert wird, sondern neben der Druckform oder an einer Stelle auf der Druckform, wo sie den Bildinhalt bzw. den Druck nicht stört. Vor jeder Gravur wird ein noch ungravierter Zylinder mit einem solchen Näpfchenmuster versehen, bei dem vor dem Nordimpuls einige Näpfchen fehlen. Damit wird der Ort des Gravurstartes in Vorschub- und Umfangsrichtung des Zylinders definiert.

Bei einer Nachgravur, z.B. bei der Erstellung von Warenhauskatalogen, bei denen die Preise nachträglich eingraviert werden, können nach der Montage des Zylinders in der Graviermaschine der Nordimpuls $N_{jo}$ der Rasterscheibe und der Gravurstart $G_S$ gegeneinander verschoben sein, was in Figur 3 schematisch dargestellt ist. Es bedeutet dort $N_{Jo}$ der Nordimpuls der Rasterscheibe und $G_S$ der Gravurstart auf dem Zylinder.

Für die Einphasung wird der Elektronenstrahl, wie bereits erwähnt, als Meßsonde betrieben, d.h. er wird gegenüber seiner Intensität bei der Materialbearbeitung mit geringerer Intensität betrieben. Sein Durchmesser wird im Verhältnis zum Durchmesser der Näpfchen so weit verringert, wie es die Positioniergenauigkeit beim Einphasen (Auflösung des Näpfchens durch den Elektronenstrahl) erfordert. Hierzu werden z.B. der Strahlfleck auf 5 µm Durchmesser und die Leistungsdichte auf $10^4$ Watt/cm$^2$ eingestellt.

Figur 4 zeigt im oberen Teil den Verlauf des Signals am Ausgang des Strom/Spannungswandlers (14). Man erkennt, daß ein symmetrisches Signal mit zwei etwa gleichen Maxima bei jedem Näpfchen erzeugt wird. Die Symmetrie dieses Signals ergibt sich zum einen dadurch, daß das Näpfchen ebenfalls symmetrisch ist und zum anderen dadurch, daß die Meßblende (7) den Elektronenstrahl (5) symmetrisch umgibt. Daraus ergibt sich, daß die Elektronenstrahlsonde an den Wänden des Näpfchens beim Einlaufen des Näpfchens in den Strahl und beim Verlassen des Strahls ein gleiches Signal erzeugt.

Mit Hilfe eines später in Figur 12 beschriebenen Vergleichers wird dieses Doppelsignal ausgewertet, und man erhält das in Figur 4 als Rechtecksignal dargestellte Signal, welches für den Einphasvorgang in Umfangsrichtung—wie später dargelegt—ausgewertet wird.

In Figur 5a sind 3 Abtastspuren durch ein Näpfchen und in Figur 5b ist der Signalverlauf für drei Abtastspuren dargestellt für den Fall, daß die axiale Nullstellung des Zylinders ermittelt werden soll. Für die drei Spuren ergeben sich die Signalverläufe (1'), (2') und (3') in Figur 5b, welche mittels des Maximumdetektors (8) der Figur 1 ausgewertet werden. Das maximale Signal ist in der zweiten Spur, d.h. im zentralen Bereich des Näpfchens, zu finden, was auch durch den Kurvenverlauf (2') bestätigt wird. Beim Einphasvorgang in Axialrichtung wird der Zählerstand gesucht, bei dem der Meßwert am Ausgang des Strom/Spannungswandlers (14) ein Maximum ergibt.

Die Gravurpositionierung bei der Nachgravur erfolgt nun relativ zu diesem Zählerstand.

Diese Vorgänge werden später anhand der Figuren 12—16 erläutert.

Wie bereits in Figur 4 dargestellt, liefert die Blende (7), ein Signal, dessen ansteigende und abfallende Flanke dem Näpfchenrand der Gravurnäpfchen entspricht. Die Figur 6 zeigt die Näpfchenspur mit einer Lücke vor dem Nordimpuls $N_{Jo}$. Bei Einphasen wird die Zahl der von dem Taktgeber abgegebenen PLL-Takte einmal vom Nordimpuls $N_{jo}$ der Rasterscheibe bis zur ansteigenden Impulsflanke des ersten nach der Lücke erscheinenden Näpfchens und zum anderen vom Nordimpuls $N_{jo}$ der Rasterscheibe bis zur abfallenden Flanke des Meßsignals gezählt, was in Figur 7 im einzelnen näher dargestellt ist. Die Anzahl der Impulse bis zur ansteigenden Flanke sei $z_1$, und die Anzahl der Impulse bis zur abfallenden Flanke sei $z_2$, wobei $z_2>z_1$ ist. Der eingephaste Nordimpuls wird—wie in Figur 7 dargestellt—dadurch erhalten, daß vom Nordimpuls der Rasterscheibe aus die Anzahl $z=1/2(z_1+z_2)$ PLL-Takte gezählt werden, wonach dann der eigentliche eingephaste Nordimpuls $N_{ji}$ elektronisch erzeugt wird. Dieser Impuls, d.h. der entsprechende Zählerstand, wird gespeichert und dient als neue Referenz für die Nachgravur in Umfangsrichtung. Die Gewinnung dieses Impulses mittels der einzelnen Schaltungskomponenten ist in Figur 10a näher dargestellt, und Figur 10a wird im Verlauf der Beschreibung der Figuren 8—11 näher erläutert.

Figur 8 zeigt den Strom/Spannungswandler (14) der Figur 1a in Detail. Der Meßstrom der Blende (7) der Figur 1 bzw. 1a gelangt an zwei in Reihe geschaltete integrierte Schaltkreise $IC_1$ und $IC_2$, die gemäß der Figur 8 beschaltet sind. Für die Schaltkreise $IC_1$ wird vorzugsweise die Type ADLH 32 und für den Schaltkreis $IC_2$ die Type ADLH 33 der Firma Analog Devices verwendet. Die Funktion dieser Schaltung wird im folgenden näher erläutert.

Der eigentliche Meßwiderstand $R_M$ liegt im Rückkopplungszweig zwischen Ausgang und Eingang der Reihenschaltung aus $IC_1$ und $IC_2$. $IC_1$ und $IC_2$ arbeiten in bekannter Weise als Strom/Spannunngswandler mit einem sehr kleinen Eingangswiderstand. Damit erhält man im Vergleich zu der in Figur 1 dargestellten Meßschaltung eine kleinere Zeitkonstante.

Der Ausgang der Stufe $IC_2$ ist mit dem Markendetektor (12) und dem Maximumdetektor (8) der Figur 1 bzw. 1a verbunden und liefert eine Ausgangsspannung $U_1$, wie sie in Figur 10a dargestellt ist.

In Figur 9 ist die Schaltung des Maximumdetektors (8) näher dargestellt. Die Spannung $U_1$ wird in einem ersten Verstärker $IC_3$ verstärkt und gleichgerichtet. Hierzu liegen im Rückkopplungszweig von $IC_3$ die Dioden $D_1$ und $D_2$, wobei die Diode $D_1$ mit dem Rückkopplungswiderstand $R_{K3}$ in Reihe und Diode $D_2$ über die Reihenschaltung aus dem Rückkopplungswiderstand $R_{K3}$ und $D_1$ in Sperrichtung liegt.

Die gleichgerichtete Spannung liegt am Eingang einer Integrator- und Haltestufe, bestehend aus den käuflichen Elektronikbausteinen $IC_4$ und $IC_5$. Das Integrationsergebnis wird auf einen A/D-Wandler $IC_6$ gegeben, der ebenfalls als integrierter Schaltkreis ausgebildet sein kann. Die Schaltung der Figur 9 läßt sich, wie bereits erwähnt, aus käuflichen Bauelementen aufbauen, wobei z.B. für den Baustein $IC_3$ die Type ADLH 32 der Firma Analog Devices, für den Baustein $IC_4$ die Type DG 300 der Firma Silonix, für den Baustein $IC_5$ die Type OP 16 der Firma PMI und für den Baustein $IC_6$ die Type AD 574 der Firma Analog Devices eingesetzt werden können.

Die Integrationsstufe $IC_4$ besitzt Steuerausgänge $SL_1$ und $SL_2$, über die sich die Funktionen Integrieren, (integrate), Halten (Hold) und Nullsetzen (Reset) anwählen lassen. Diese Leitungen sind mit dem Schrittmotor Steuerrechner (10a) für den Schrittmotor verbunden.

Die Funktionen Integrieren, Halten und Zurücksetzen werden mit Hilfe des MOS-Schalters $IC_4$ ausgewählt, was entsprechend folgender Wahrheitstabelle geschieht.

| | $SL_1$ | $SL_2$ |
|---|---|---|
| Integrieren | L | H |
| Halten | H | L |
| Zurücksetzen | H | H |

Die Figur 10 zeigt den Markendetektor (12) der Figuren 1 und 1a. Das Ausgangssignal des Strom/Spannungswandlers (14), der in Figur 8 im einzelnen beschrieben ist, gelangt als Eingangssignal $U_1$ auf eine Gleichrichterstufe $IC_7$, die wie die Gleichrichterstufe $IC_3$ der Figur 9 aufgebaut ist. Das gleichgerichtete Ausgangssignal $U_2$ dieser Stufe wird mit einer Referenzspannung $U_{Ref}$ in einem Komparator $IC_8$ verglichen, um ein digitales Ausgangssignal $U_3$ zu erhalten. Die Signale $U_1$, $U_2$, $U_{Ref}$ und $U_3$ sind in Figur 10a dargestellt.

Um das erste Näpfchen nach der Lücke in der Referenzspur (Figur 2 bzw. Figur 6) zu detektieren, wird das digitale Ausgangssignal $U_3$ auf eine Verzögerungsstufe $IC_{11}$ gegeben, deren Ausgangssignal in Figur 10a mit $U_4$ bezeichnet ist. Außerdem wird das Signal $U_3$ einem nachtriggerbaren Monoflop $IC_9$ zugeführt, dessen Ausgangssignal $U_5$ (Figur 10a) der Lücke entspricht. Das Signal $U_5$ wird einem weiteren Monoflop $IC_{10}$ zugeführt, dessen Zeitkonstante einem Näpfchentakt entspricht. Dieses Ausgangssignal $U_6$ (Figur 10a) wird zusammen mit dem Ausgangssignal $U_4$ der Verzögerungsstufe auf ein UND-Tor $T_1$ gegeben, an dessen Ausgang ein Signal $U_7$ erscheint, das dem ersten Näpfchen nach der Lücke in der Referenzspur (Figur 7c bzw. Spannung $U_7$ in Figur 10a) entspricht. Das Signal $U_7$ gelangt einerseits über ein Laufzeitausgleichsglied $T_2$ auf ein Monoflop $IC_{12}$ und andererseits über einen Invertierer $T_3$ an ein weiteres Monoflop $IC_{13}$.

Die beiden Monoflops $IC_{12}$ und $IC_{13}$ erzeugen zwei zu den Flanken $Z_1$ und $Z_2$ der Figur 7 gehörige Nadelimpulse, die mit Marke 1 und Marke 2 bezeichnet werden und in Figur 10a als $U_9$ und $U_{11}$ dargestellt sind.

Für die in Figur 10 dargestellte Schaltung können z.B. folgende käufliche Bauelemente verwendet werden.

| | | |
|---|---|---|
| $IC_7$ | OP 16 | Fa. PMI |
| $IC_8$ | LM 311 | Fa. National Semiconductor |
| $IC_9$ | 74 LS 122 | Fa. Texas Instruments |
| $IC_{10}$ | 74 LS 121 | Fa. Texas Instruments |
| $IC_{11}$ | 74 LS 31 | Fa. Texas Instruments |
| $IC_{12}$ | 74 LS 121 | Fa. Texas Instruments |
| $IC_{13}$ | 74 LS 121 | Fa. Texas Instruments |

Figur 11 zeigt eine Schaltungsanordnung, mit deren Hilfe der gegenüber dem Nordimpuls $N_{jo}$ der Rasterscheibe (Figur 2 bzw. Figur 3) verschobenen Nordimpuls $N_{jl}$ erzeugt wird. Um dies zu erreichen, werden zuerst die Zählerstände $Z_1$ und $Z_2$ gewonnen, die zum einen der Anzahl der PLL-Takte zwischen $N_{jo}$ der Rasterscheibe und der Marke 1 und zum anderen der Zahl der PLL-Takte zwischen dem Nordimpuls $N_{jo}$ und der Marke 2 entsprechen.

Hierzu ist ein ladbarer 24-bit-Zähler $IC_{18}$ vorgesehen, der mit drei 8-bit-D-bit-Registern $IC_{15}$ bis $IC_{17}$ sowie mit drei 8-bit-D-Latches in Verbindung steht. Über einen 2-bit-Binärdecoder $IC_{22}$ lassen sich die Register $IC_{15}$ bis $IC_{17}$ nacheinander vom Steuerrechner (13a) mittels der Steuerleitungen $C_1$ und $C_2$ anwählen und über den Datenausgang laden und die Register $IC_{19}$ bis $IC_{21}$ auslesen.

Die Gewinnung der Zählerstände $Z_1$ und $Z_2$ erfolgt mit Hilfe der Marken 1 und 2 sowie dem Zähler $IC_{18}$ und der beiden Registergruppen $IC_{15}$ bis $IC_{17}$ und $IC_{19}$ bis $IC_{21}$. Den Zählerstand $Z_1$ erhält man, indem man eine Steuerleitung $C_3$, die mit dem Zentralrechner (13) und den Gattern $T_7$, $T_8$ und $T_{12}$ in Verbindung steht, auf L setzt.

Zwei weitere mit dem Rechner (13) und Gattern $T_4$ und $T_5$ verbundene Steuerleitungen $C_4$ und $C_5$ bestimmen, welche der Marken 1 bzw. 2 von den Gattern $T_4$ und $T_5$ durchgelassen werden.

Zur Selektion der Marke 1 liegt die Steuerleitung $C_4$ auf L und die Steuerleitung $C_5$ auf H. Bei jedem Nordimpuls werden die Register $IC_{15}$ bis $IC_{17}$ über ein Tor $T_7$ auf Null gesetzt und nach einer durch ein Verzögerungsglied $T_6$ bestimmten Verzögerungszeit werden die Inhalte der Register $IC_{15}$ bis $IC_{17}$ in den Zähler $IC_{18}$ übernommen, d.h. $IC_{18}$ wird bei jedem Nordimpuls auf Null gesetzt.

Durch das Tor $T_8$ wird der Zähler $IC_{18}$ auf Aufwärtszählen geschaltet und durch die PLL-Takte hochgezählt.

Beim Erscheinen der Marke 1 wird der Inhalt des Zählers $IC_{18}$ in die Register $IC_{19}$ bis $IC_{21}$ übernommen und als Zählerstand $Z_1$ nach einer Verzögerungszeit, die durch das Monoflop $IC_{21}$ bestimmt wird, in den Zentralrechner (13) eingelesen.

Entsprechend wird der Zählerstand $Z_2$ mit Hilfe der Marke 2 gewonnen, indem die Steuerleitung $C_4$ auf H und die Steuerleitung $C_5$ auf L gesetzt werden.

Nachdem die Zählerstände $Z_1$ und $Z_2$ im Zentralrechner (13) vorliegen, wird im Rechner der Mittelwert Z berechnet. Anschließend wird die Steuerleitung $C_3$ vom Rechner (13) auf H gesetzt. Dies bewirkt, daß die Register $IC_{15}$ bis $IC_{17}$ nicht mehr bei jedem Nordimpuls auf Null gesetzt werden, sondern daß der einmal eingeschriebene Wert beibehalten und bei jedem Nordimpuls dieser Wert in den Zähler $IC_{18}$ übernommen wird. Außerdem wird der Zähler $IC_{18}$ über den Inverter $T_8$ auf Abwärtszählen geschaltet und das Ausgangssignal (Überlauf=Ripple carry output) des Zählers $IC_{18}$ über ein Tor $T_{12}$ durchgelassen. Gleichzeitig wird der Mittelwert Z ebenfalls vom Rechner (13) in die Register $IC_{15}$ bis $IC_{17}$ geladen.

Bei jedem folgenden Nordimpuls $N_{jo}$ werden die Inhalte der Register $IC_{15}$ bis $IC_{17}$ in den Zähler $IC_{18}$ geladen und mit jedem PLL-Takt herabgezählt. Beim Zählerstand Null wird für eine PLL-Taktlänge das Signal "Ubertrag", wie bereits erwähnt, ausgegeben. Dieser Vorgang wiederholt sich bei jeder Trommeldrehung.

Für die in Figur 11 dargestellte Schaltung können z.B. folgende käufliche Bauelemente verwendet werden:

| | | |
|---|---|---|
| $IC_{15}$ | 74LS273 | Firma Texas Instruments |
| $IC_{16}$ | 74LS273 | " " " |
| $IC_{17}$ | 74LS273 | " " " |
| $IC_{18}$ | 6×74 669 | " " " |
| $IC_{19}$ | 74LS373 | " " " |
| $IC_{20}$ | 74LS373 | " " " |
| $IC_{21}$ | 74LS373 | " " " |
| $IC_{22}$ | 74LS155 | " " " |
| $IC_{23}$ | 74LS121 | " " " |

Im folgenden wird der Ablauf der Rechnersteuerung der Anlage näher beschrieben. Wie bereits erwähnt, ist der zentrale Steuerrechner (13) über einen Intel-Multi-Bus IEEE 796 mit dem Schrittmotor-Steuerrechner (10a) verbunden. Die Spezifikation dieses Bus' ist in dem Handbuch, Intel, OE-Systems handbook 1983, order No. 210941-001, Seiten 3-1 bis 3-10 beschrieben, so daß hier eine Wiederholung dieser Beschreibung unterbleibt, da der Bus ohne Modifikationen übernommen werden kann.

Der zentrale Steuerrechner (13) dient als Masterrechner in der Rechnersteuerung; der Schrittmotor-Rechner (10a) arbeitet als Slave-Rechner. Die Daten werden in bekanntem hand-shake-Verfahren zwischen Master und Slave transferiert. Der Motorsteuerrechner (10a) bekommt vom zentralen Steuerrechner (13) Befehlscodes und Parameter übertragen, wie z.B. "Fahre den Schrittmotor in Soll-Position", wobei "Fahre den Schrittmotor" ein Befehl und "Soll-Position" der zugehörige Parameter ist.

Der Schrittmotor-Rechner (10a) gibt nach dem Ausführen eines Befehls eine "Status-Meldung", z.B. "Soll-Position erreicht", an den zentralen Steuerrechner (13).

In Figur 12 ist in Form eines Flußdiagramms der Programmablauf des Steuerrechners (13) näher aufgezeigt. Da ein solcher Rechner nicht nur für die Steuerung der erfindungsgemäßen Einphaselektronik eingesetzt wird, sondern auch noch andere Steueraufgaben, z.B. Steuerung der Elektronenstrahlkanone oder der Gesamtanlage, übernimmt, werden hier nur die Programmsegmente beschrieben, die für die Durchführung der Erfindung von Bedeutung sind, nämlich die Programmsegmente: "Befehl an Schrittmotorsteuerung 10a".

Anfahren der Startposition für die Einphasung "Befehl an Steuermotor-Rechner 10a".

Einphasung in Vorschubrichtung und das Unterprogramm "Einphasung in Umfangsrichtung".

Figur 13 zeigt in Form eines weiteren Flußdiagramms den Programmablauf im Schrittmotor-Steuerrechner (10a), der im wesentlichen aus folgenden Programmsegmenten besteht:

— Warten auf ein Kommando des Steuerrechners (13),
— Decodierung des Kommandos,
— Verzweigung zu den später in den Figuren 14 bis 15 noch näher erläuterten Befehlsausführungsprogrammen
— Statusmeldung.

In Figur 14 ist das Programm "Anfahren der Startposition für die Einphasung" als Flußdiagramm dargestellt, wobei folgender Ablauf gegeben ist:

— Abfrage, ob Motorposition größer oder kleiner als Startposition für Einphasung,
— Befehl an Motor Vor-Rücklauf (Leitung Vor-Rücklauf Figur 1a zwischen 10a und 10b),
— Anlegen des Schrittmotortaktes über Leitung φ (Figur 1a) an Schrittmotor, bis Soll-Position erreicht ist, und
— Statusmeldung.

In Figur 15 ist das Unterprogramm "Einphasen in Vorschubrichtung" als Flußdiagramm beschrieben. Der Ablauf dieses Programms wurde bereits bei der Beschreibung der Figur 9 bis zum Auslesen des Analog/Digital-Wandlers, $IC_6$ beschrieben. Siehe obere Hälfte der Figur 15.

Der weitere Programmablauf ist im unteren Teil der Figur 15 dargestellt und wird im folgenden in Verbindung mit den Figuren 5a und 5b beschrieben.

Wenn eine Spur der Figur 5a durchlaufen wird, z.B. die erste Spur, so wird das Meßsignal dieser Näpfchenspur integriert festgehalten, mit dem Analog/Digital-Wandler $IC_6$ der Figur 9 digitalisiert und in ein Rechnerregister, das im folgenden mit Data-N-1-Register bezeichnet wird, eingegeben.

Der Schrittmotor erhält vom Motorsteuer-Rechner (10a) einen Impuls zur Ausführung eines Einzelschrittes, der z.B. zur zweiten Spur der Figur 5a führt. Für diese Spur wird dieselbe Befehlsschrittfolge wie für die erste Spur durchgeführt und der entsprechende Meßwert in ein weiteres Rechnerregister mit der Bezeichnung Data-N abgelegt. Die beiden gespeicherten Meßwerte werden miteinander verglichen. Ist der Inhalt des Registers Data-N kleiner als der Inhalt des Registers Data-N-1, so wird der vorbeschriebene Ablauf solange wiederholt, bis der Inhalt des Registers Data-N kleiner als der Inhalt des Register-Data-N-1 ist. Dann wird eine Statusmeldung, d.h. daß in Vorschubrichtung eingephast ist, an den Steuerrechner (13) gegeben, und der Inhalt des Registers Data-N-1 wird in ein weiteres Register "Gravurstartposition" übernommen. Dieser Zählerstand des Schrittmotors ist als Ort des Maximums der vom Abtaster erhaltenen Signale der Referenzwert für den Axialvorschub für die nachfolgende Gravur.

In Figur 16 ist das Unterprogramm "Umfangseinphasen" des Steuerrechners (13) dargestellt. Dieser Programmablauf ist bereits bei der Beschreibung der Figur 11 abgehandelt worden und ist hier nur der besseren Überlicht halber in nacheinanderfolgenden Einzelschritten angegeben.

**Patentansprüche**

1. Verfahren zum ortsgenauen Nachgravieren von Druckzylindern (2) mittels abgetasteter Marken, bei dem bei Wiedereinsetzen des Zylinders in die Graviermaschine die ortsgenaue Lage vorgravierter Näpfchen sowohl in Umfangsrichtung als auch in Achsrichtung des Zylinders detektiert wird, dadurch gekennzeichnet, daß

a) vor der eingentlichen Gravur eines noch nicht gravierten Druckzylinders (2) mittels eines Elektronenstrahls auf einer Umfangslinie eine Reihe von nacheinander angeordneten Näpfchen graviert wird, welche als Referenzmarken für den Axialvorschub und den Start der Nachgravur in Umfangsrichtung dienen,

b) nachdem der Druckzylinder (2) zur Nachgravur in die Graviermaschine eingespannt ist und das Elektronenstrahlerzeugungssystem (4) von Gravur- auf Meßbetrieb umgeschaltet wurde, der Druckzylinder in Drehung versetzt wird und der Elektronenstrahl als Abtaster axial relativ zum Druckzylinder über die vorher gravierte Näpfchenspur bewegt wird und das Maximum der vom Abtaster gelieferten Signale ermittelt wird, und der Ort des Maximums in der Näpfchenspur als Referenzwert für den Axialvorschub bei der folgenden Gravur festgehalten wird,

c) die vorher auf der Umfangslinie gravierte Reihe von Näpfchen mindestens eine definierte Lücke enthält, die frei von Näpfchen ist, und

d) daß das erste auf eine Lücke folgende Näpfchen in gleicher Weise in Umfangsrichtung abgetastet wird und somit der Referenzort für den Start der nachfolgenden Gravur in Umfangsrichtung festgestellt wird.

2. Einrichtung zur Durchführung des Verfahrens gemäß Anspruch 1, gekennzeichnet durch

a) ein von Gravur- auf Meßbetrieb umschaltbares Elektronenstrahlerzeugungssystem (4) zum Detektieren von nacheinander auf einer Umfangslinie eines Druckzylinders (2) in einer Napfchenspur angeordneten Näpfchen, die mittels des Elektronenstrahls im Gravierbetrieb erzeugt wurden, wobei die Näpfchenspur eine Lücke aufweist,

b) eine erste Auswerteschaltung (8), die in axialer Richtung des Druckzylinders (2) den Ort der Näpfchenmitte innerhalb der Näpfchenspur ermittelt und den Start der Graviereinrichtung in axialer Richtung für die Nachgravur bestimmt,

c) eine zweite Auswerteschaltung (12), die in Umfangsrichtung des Druckzylinders (2) den Ort der Näpfchenmitte des ersten auf die Lücke folgenden Näpfchens ermittelt und den Start der Graviereinrichtung in Umfangsrichtung für die Nachgravur bestimmt.

**Revendications**

1. Procédé pour la gravure complémentaire, en des endroits précis, et par exploration de repères, de cylindres d'impression (2), procédé dans lequel, lorsque le cylindre est remis en place dans la machine à graver, les petites cuvettes préalablement gravées dans des endroits précis sont détectées aussi bien dans la direction périphérique que dans la direction axiale de ce cylindre, procédé caractérisé en ce que:

a) avant la gravure proprement dite d'un cylindre d'impression (2) non encore gravé, une rangée de petites cuvettes disposées successivement est gravée au moyen d'un faisceau d'électrons, ces cuvettes servant de repères de référence pour l'avance axiale et le démarrage de la gravure complémentaire en direction périphérique,

b) après que le cylindre d'impression (2) ait été monté pour la gravure complémentaire dans la machine à graver et que le système (4) de production du faisceau d'électrons ait été commuté de son fonctionnement pour la gravure sur son fonctionnement pour la mesure, le cylindre d'impression est mis en rotation et le faisceau d'électrons, jouant alors le rôle d'un moyen d'exploration, est déplacé axialement par rapport au cylindre d'impression sur la rangée de petites cuvettes précédemment gravées et le maximum des signaux ainsi délivrés par ce moyen d'exploration est déterminé, et l'emplacement de ce maximum dans la rangée de petites cuvettes est retenu en tant que valeur de référence pour l'avance axiale lors de la gravure suivante,

c) la rangée de petites cuvettes précédemment gravées sur la ligne périphérique, comprend au moins une solution de continuité définie qui est exempte de petites cuvettes,

d) la première petite cuvette après une solution de continuité est explorée de la même façon en direction périphérique et ainsi l'emplacement de référence pour le démarrage de la gravure suivante en direction périphérique est déterminé.

2. Installation pour la mise en oeuvre du procédé selon la revendication 1, caractérisée en ce qu'elle comporte:

a) un système (4) de production d'un faisceau d'électrons, susceptible d'être commuté de son fonctionnement pour la gravure sur son fonctionnement pour la mesure, afin de détecter des petites cuvettes, disposées successivement en une rangée sur une ligne périphérique d'un cylindre d'impression (2), et qui ont été produites par le faisceau d'électrons fonctionnant pour la gravure, cette rangée de petites cuvettes comportant une solution de continuité,

b) un premier circuit d'exploitation (8), qui détecte en direction axiale du cylindre d'impression (2), l'emplacement du milieu des petites cuvettes à l'intérieur de la rangée de petites cuvettes, et qui détermine le démarrage du dispositif de gravure en direction axiale pour la gravure complémentaire,

c) un second circuit d'exploitation (12), qui détecte en direction périphérique du cylindre d'impression (2), l'emplacement du milieu de la première petite cuvette après la solution de continuité, et qui détermine le démarrage du dispositif de gravure en direction périphérique pour la gravure complémentaire.

**Claims**

1. A method for spot-accurate re-engraving of printing cylinders (2) by means of scanned marks in which the spot-accurate position of pre-engraved small pits is detected in the peripheral direction as well as the axial direction of the cylinder upon reinsertion of the cylinder into the engraving machine, characterised in that

(a) a series of successively arranged small pits, acting as reference marks for axial feed and the start of the re-engraving in the peripheral direction, is engraved on a peripheral line prior to the actual engraving of an as yet not engraved printing cylinder (2) by means of an electron beam,

(b) after the printing cylinder (2) has been clamped in the engraving machine for re-engraving and the electron beam generating system (4) has been switched from the engraving to the measuring operation, the printing cylinder is moved in rotation and the electron beam is displaced axially relative to the printing cylinder, as a scanner, over the previously engraved track of small pits and the maximum of the signal produced by the scanner is determined, and the location of the maximum in the track of small pits is retained as a reference value for the axial feed during the following engraving,

(c) the series of small pits previously engraved on the peripheral line contains at least one defined gap which is free of small pits, and

d) that the first small pit following a gap is scanned in the same manner in the peripheral direction and thus the reference location for the start of the following engraving in peripheral direction is determined.

2. A device for implementation of the method according to claim 1, characterised by

(a) an electron beam generating system (4) switchable from an engraving to a measuring operation, for detection of small pits arranged on a track of small pits, successively along a peripheral line of a printing cylinder (2) which had been produced by means of the electron beam in the engraving operation, the track of small pits having a gap,

(b) a first evaluating circuit (8) which is the axial direction of the printing cylinder (2) establishes the location of the centre of the small pits within the track of small pits and determines the start of the engraving device in the axial direction for the re-engraving,

(c) a second evaluating circuit (12) which in the peripheral direction of the printing cylinder (2) establishes the location of the small pit centre of the first small pit following the gap and determines the start of the engraving device in the peripheral direction for the re-engraving.

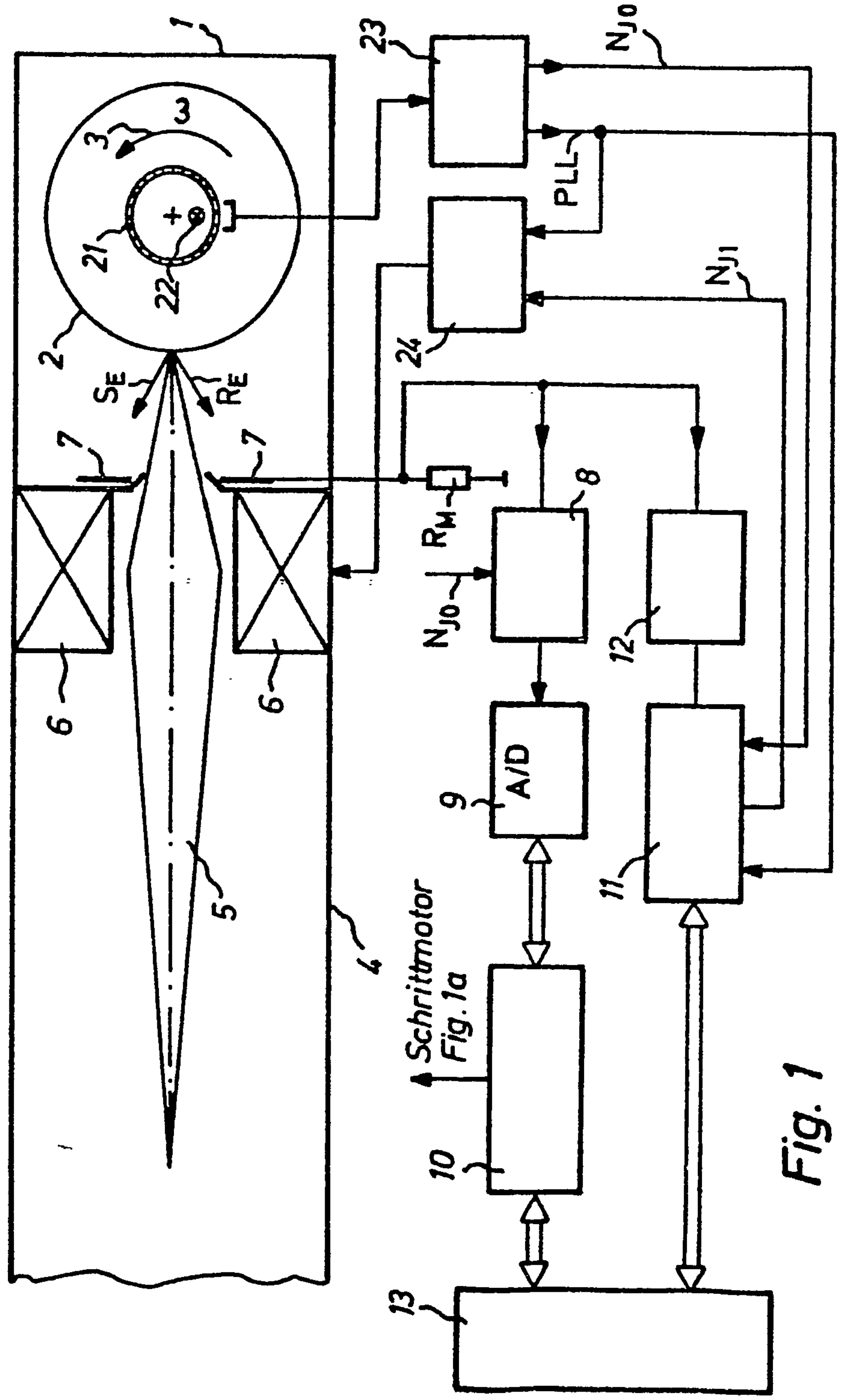


Fig. 1

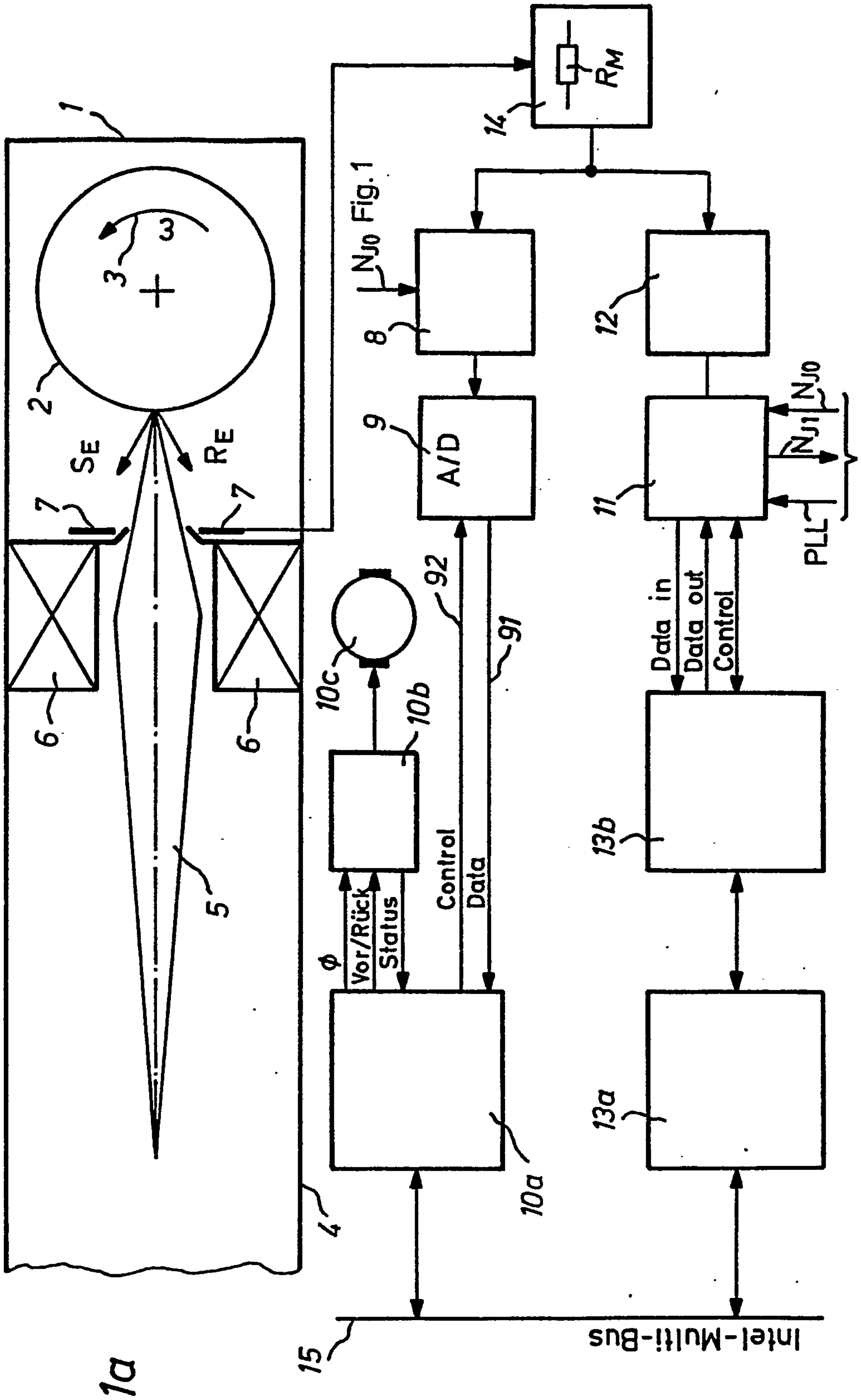
1
2
3
4
5
6
7
$S_E$
$R_E$
8
9
A/D
10a
10b
10c
11
12
13a
13b
14
$R_M$
15
91
92
$N_{J0}$ Fig.1
$N_{J0}$
$N_{J1}$
PLL
Fig.1
Data in
Data out
Control
Control
Data
Φ
Vor/Rück
Status
Intel-Multi-Bus

Fig. 1a

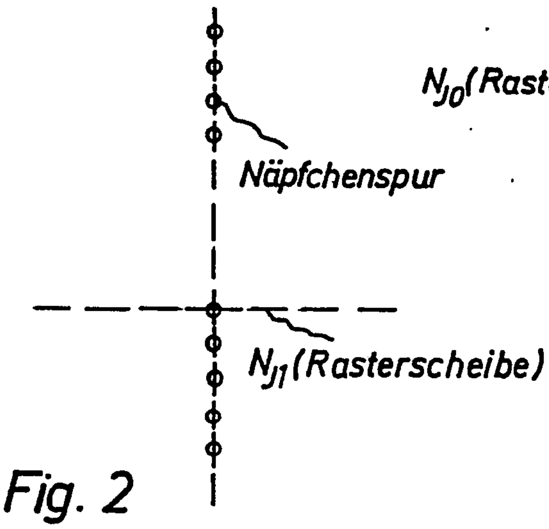


Fig. 2

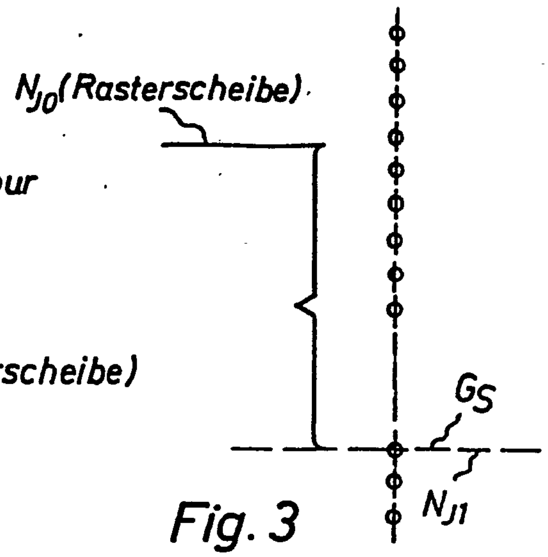


Fig. 3

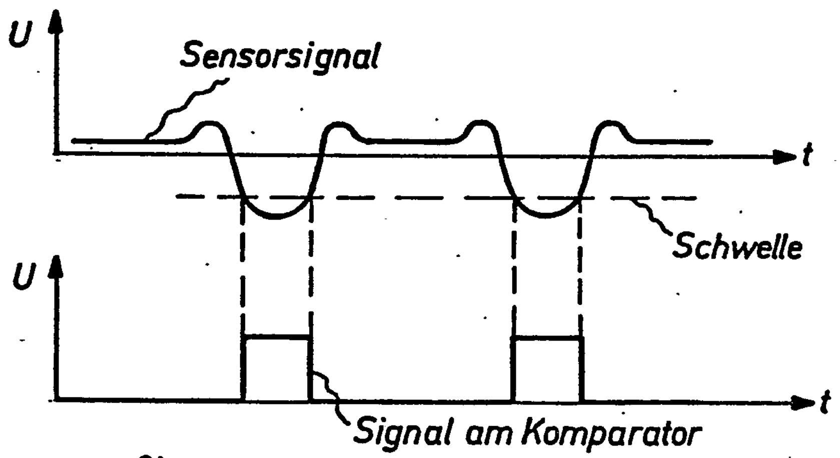


Fig. 4

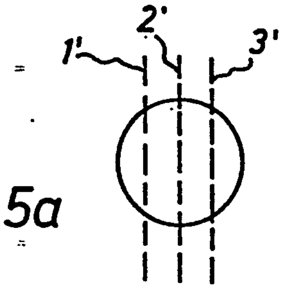


Fig. 5a

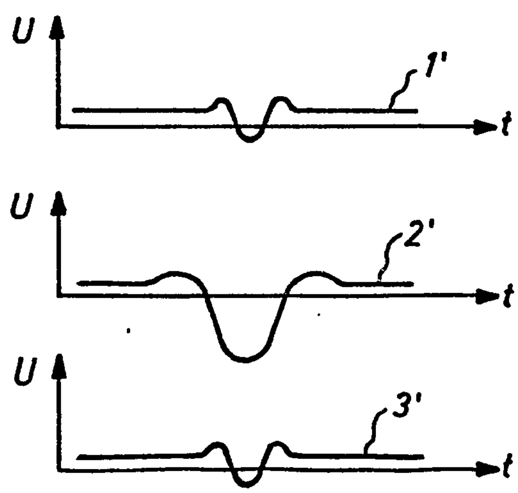


Fig. 5b

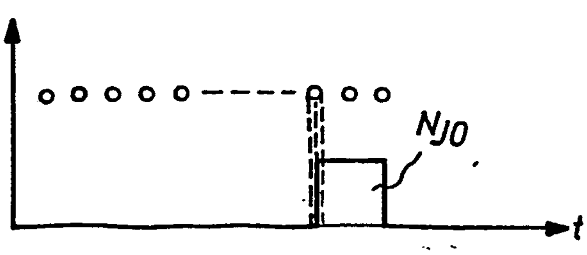


Fig. 6

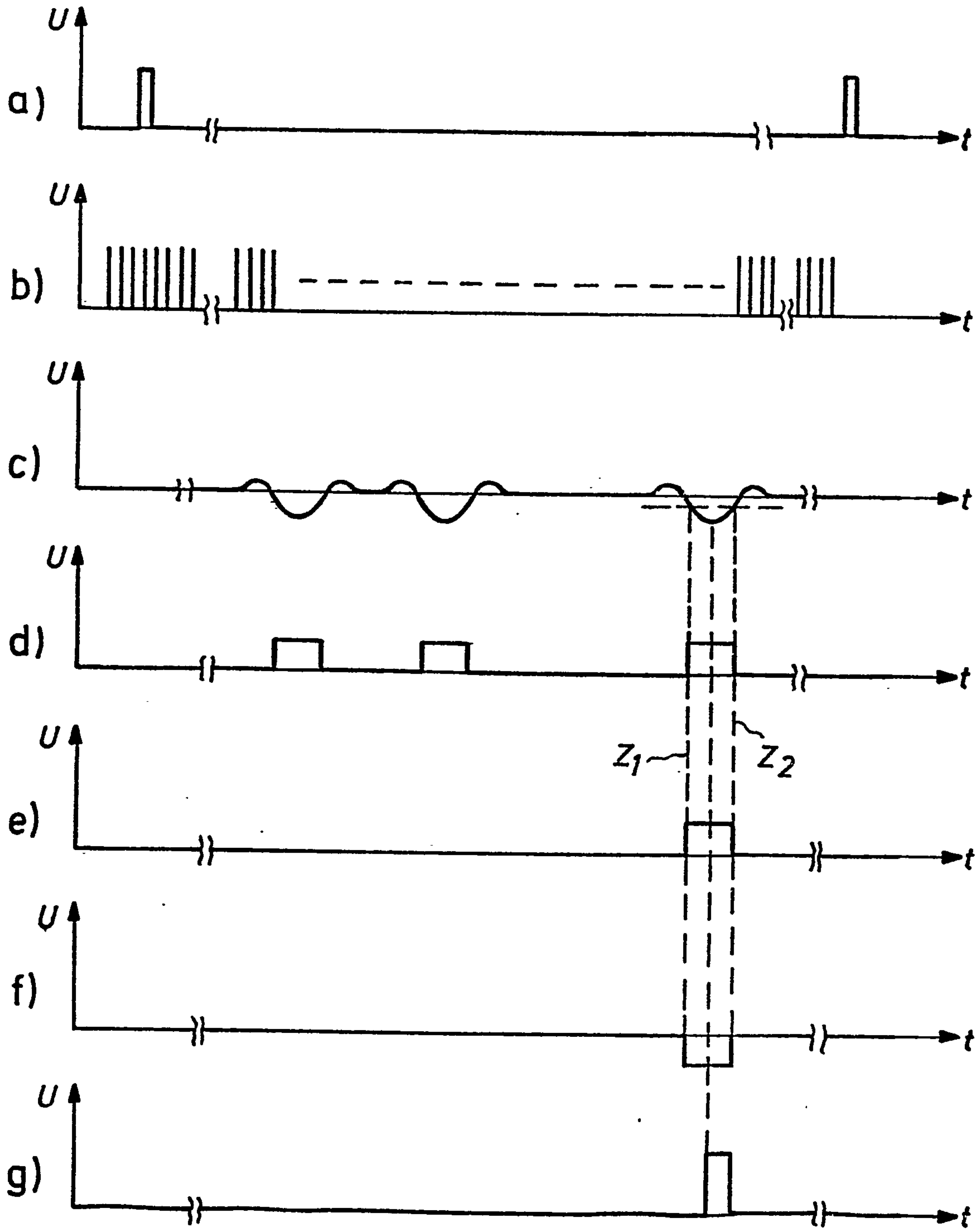


Fig. 7

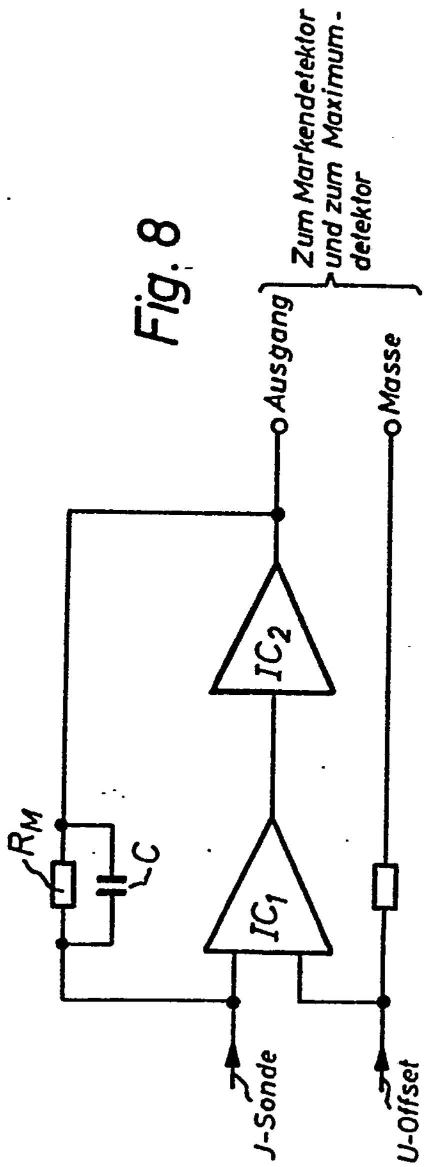

$R_M$
C
$IC_1$
$IC_2$
J-Sonde
U-Offset
Ausgang
Masse
Zum Markendetektor und zum Maximum-detektor


Fig. 8

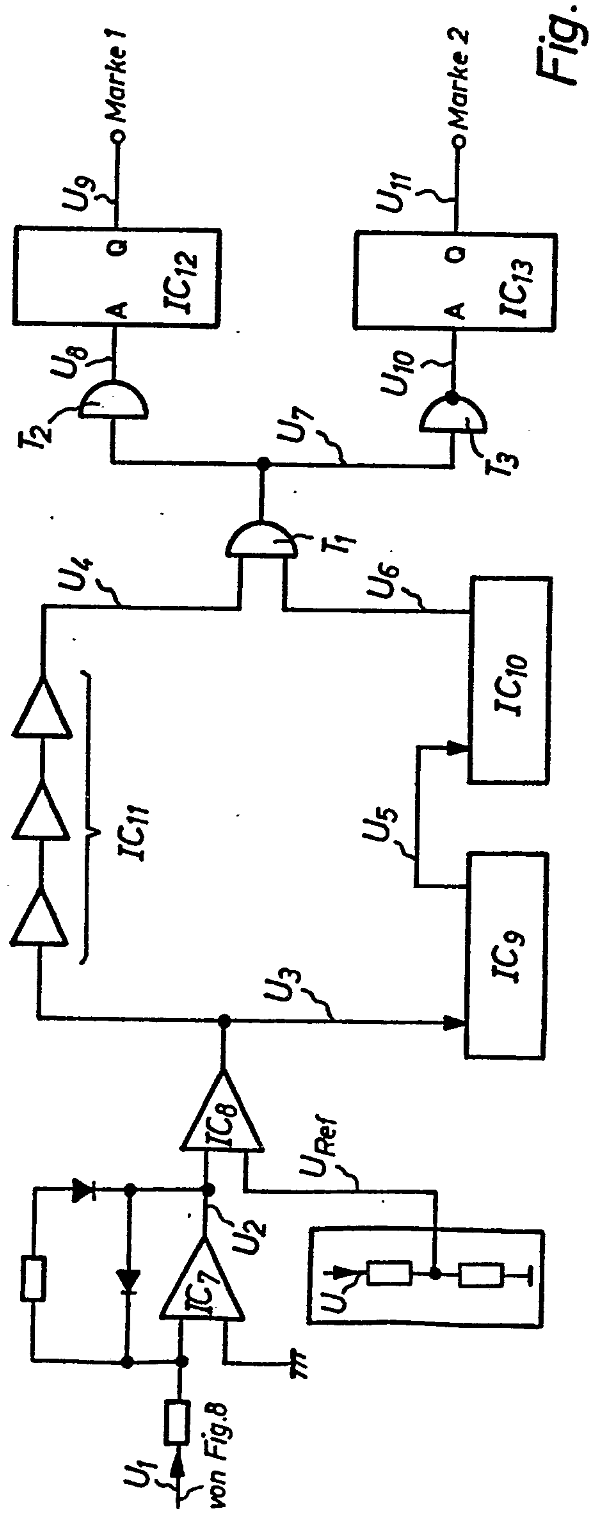

$U_1$
von Fig.8
$IC_7$
$U_2$
$IC_8$
$U_{Ref}$
$U_3$
$IC_{11}$
$IC_9$
$U_5$
$IC_{10}$
$U_4$
$U_6$
$T_1$
$U_7$
$T_2$
$T_3$
$U_8$
$U_{10}$
A
Q
$IC_{12}$
$IC_{13}$
$U_9$
$U_{11}$
Marke 1
Marke 2


Fig. 10

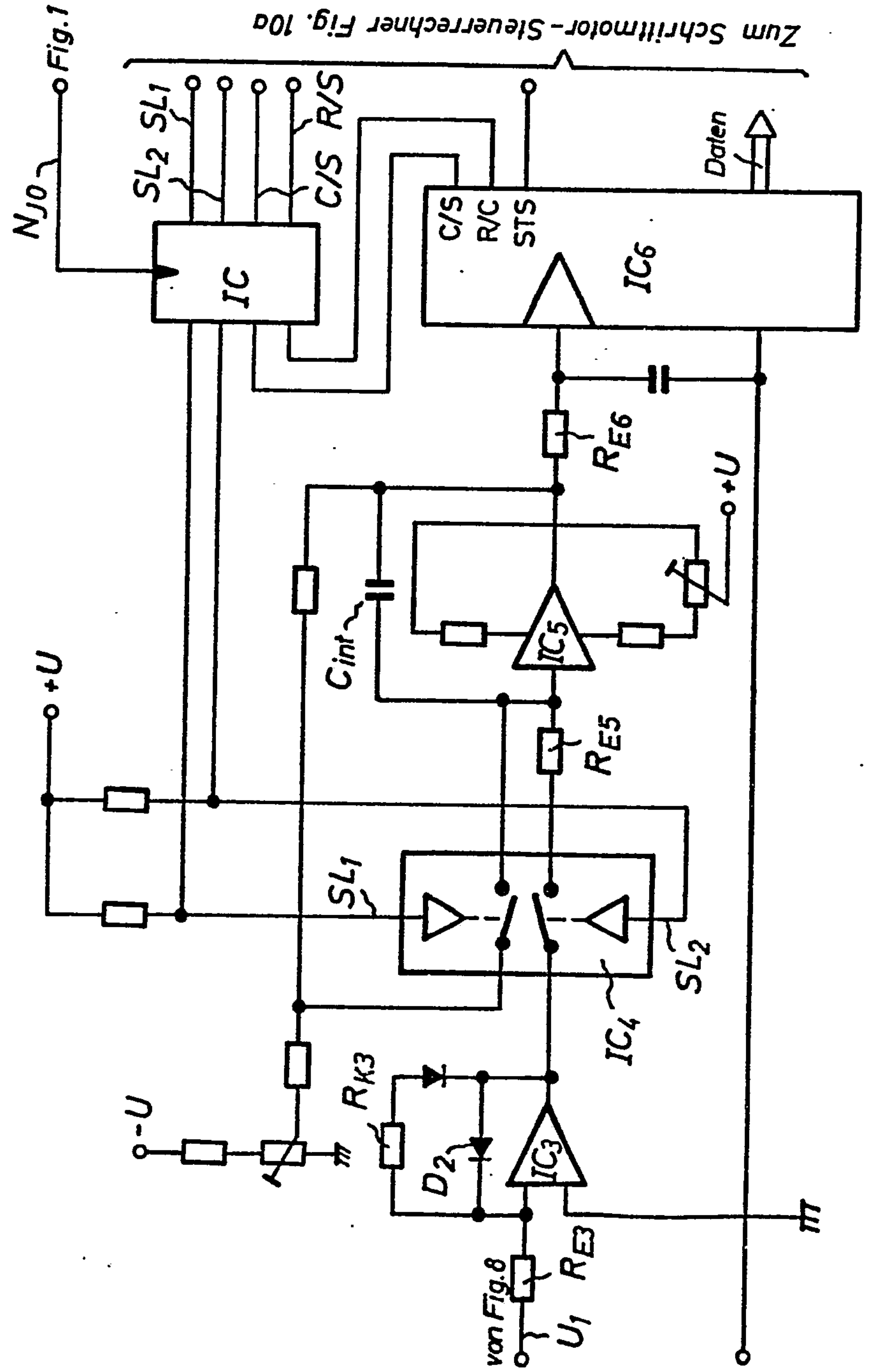
Zum Schrittmotor-Steuerrechner Fig. 10a
Fig.1
NJ0
SL2
SL1
C/S
R/S
IC
C/S
R/C
STS
IC6
Daten
RE6
+U
Cint
IC5
RE5
+U
SL1
SL2
IC4
RK3
D2
IC3
-U
RE3
von Fig.8
U1

Fig. 9

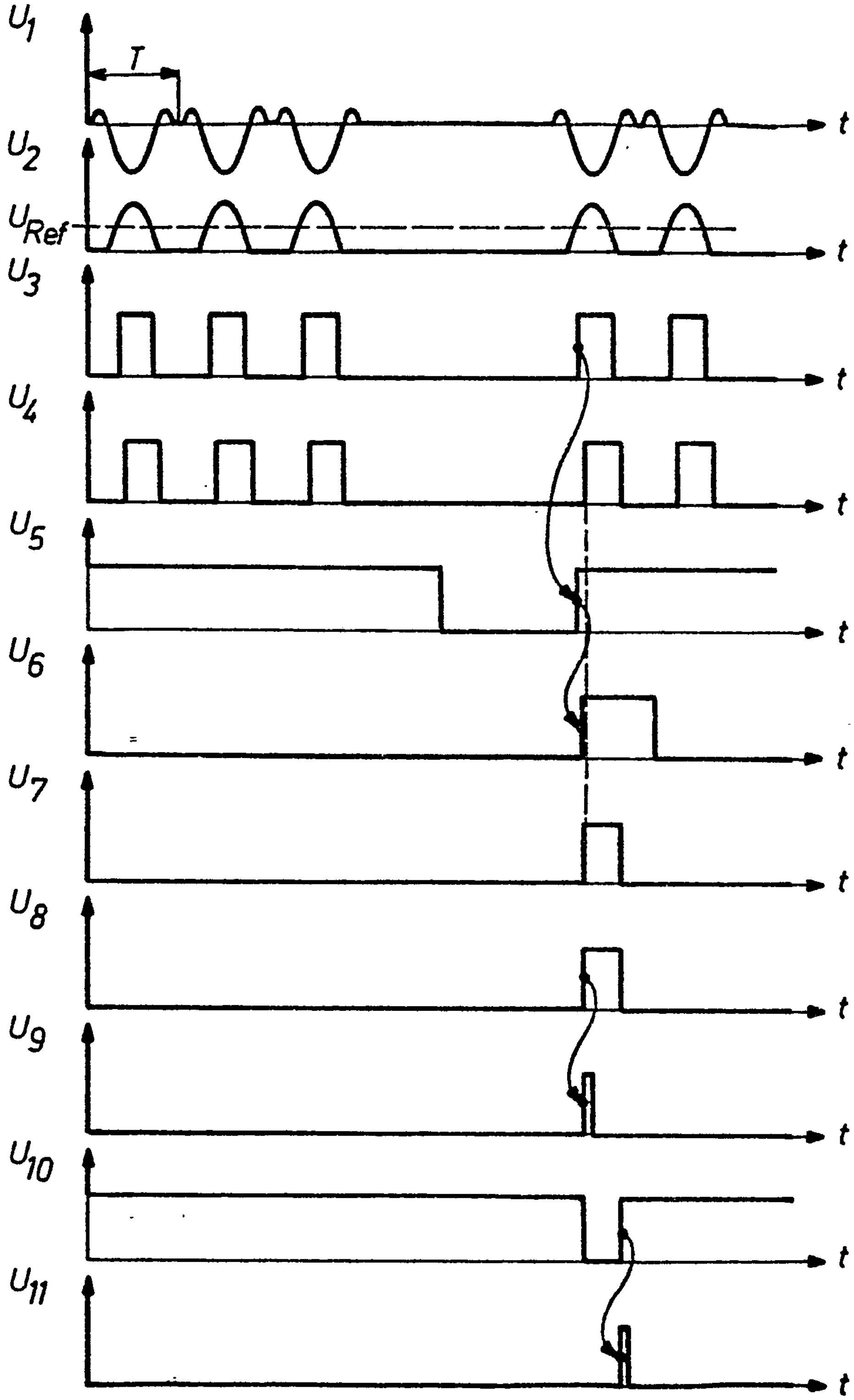


Fig. 10a

Fig. 11

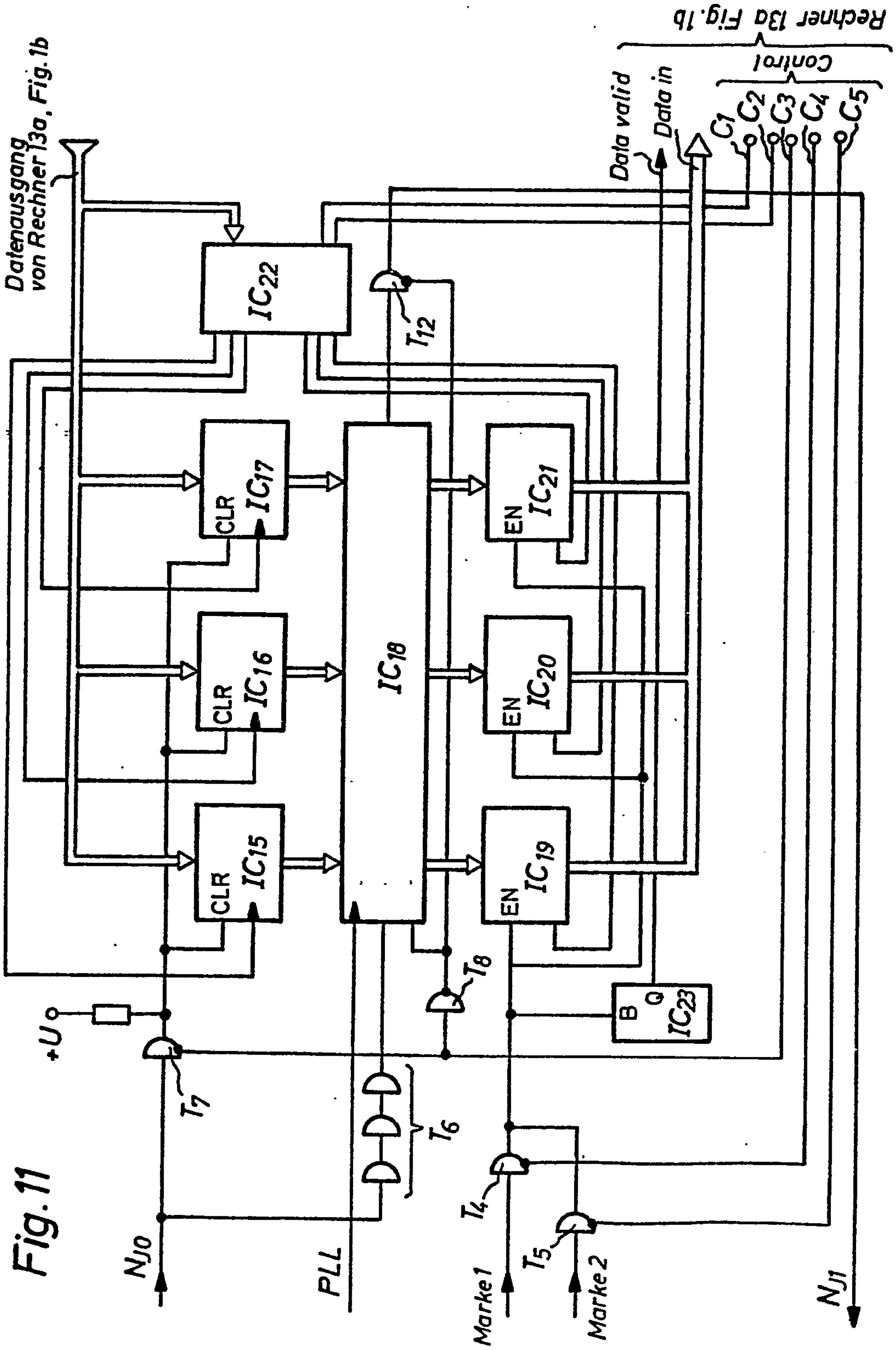
Datenausgang von Rechner 13a, Fig. 1b
Rechner 13a Fig. 1b
Control
Data valid
Data in
C1
C2
C3
C4
C5
IC22
T12
IC17
IC16
IC15
CLR
IC18
IC21
IC20
IC19
EN
T8
B
Q
IC23
+U
T7
T6
T4
T5
$N_{J0}$
PLL
Marke 1
Marke 2
$N_{J1}$

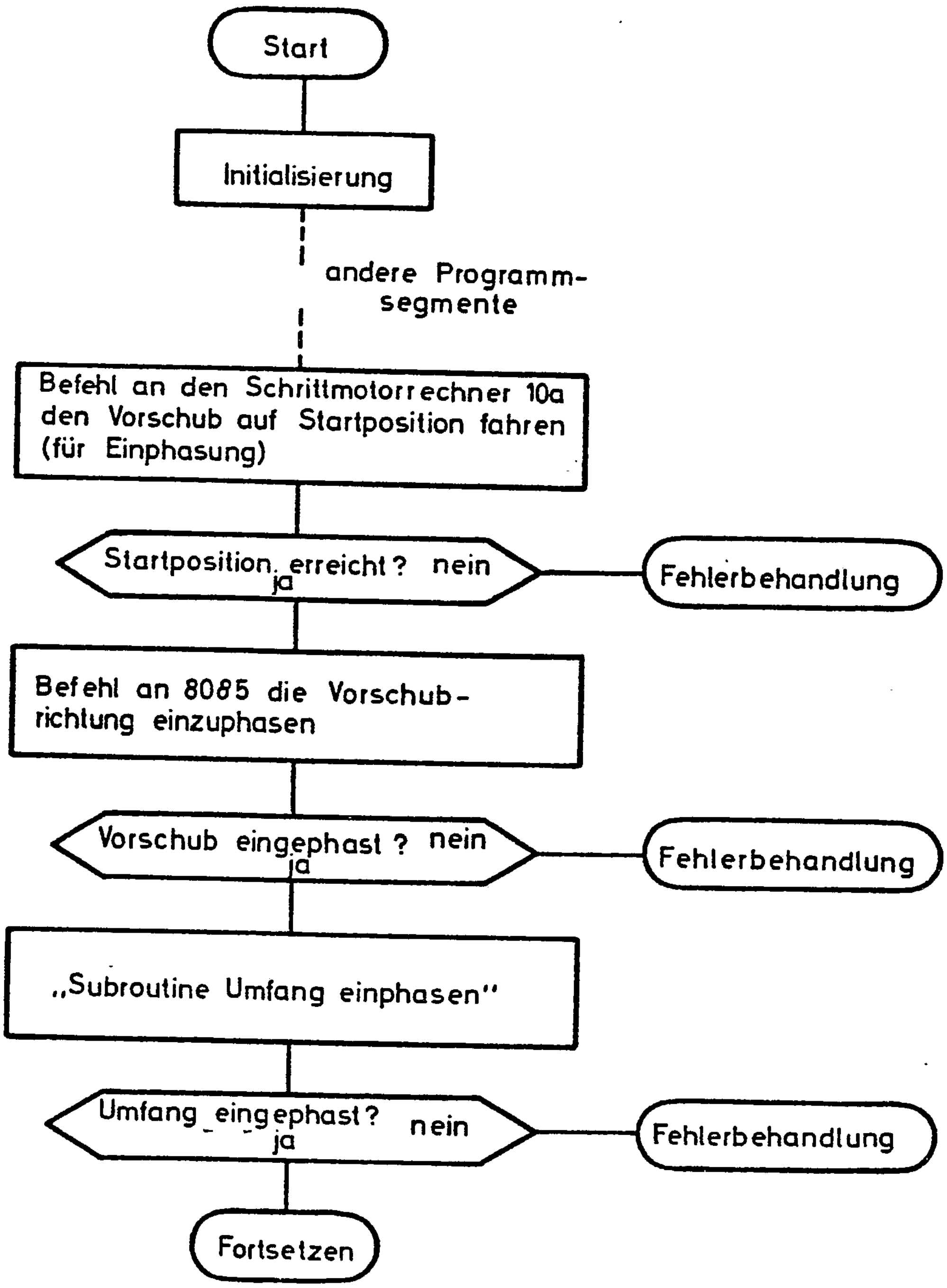
Start
Initialisierung
andere Programm-
segmente
Befehl an den Schrittmotorrechner 10a
den Vorschub auf Startposition fahren
(für Einphasung)
Startposition erreicht?
nein
ja
Fehlerbehandlung
Befehl an 8085 die Vorschub-
richtung einzuphasen
Vorschub eingephast?
nein
ja
Fehlerbehandlung
„Subroutine Umfang einphasen"
Umfang eingephast?
nein
ja
Fehlerbehandlung
Fortsetzen

*Fig. 12*

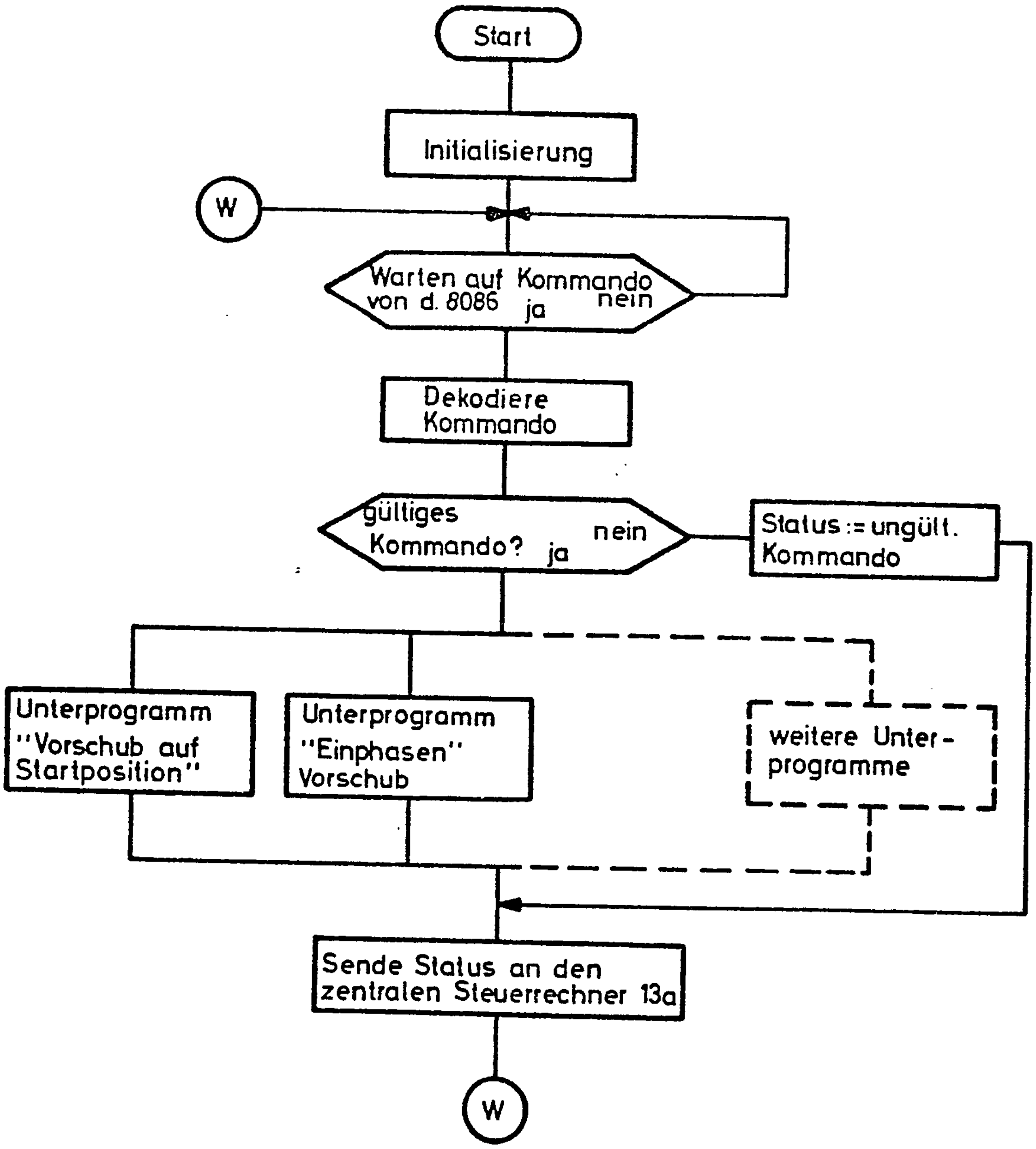
Start
Initialisierung
W
Warten auf Kommando von d. 8086
ja
nein
Dekodiere Kommando
gültiges Kommando?
ja
nein
Status := ungült. Kommando
Unterprogramm "Vorschub auf Startposition"
Unterprogramm "Einphasen" Vorschub
weitere Unterprogramme
Sende Status an den zentralen Steuerrechner 13a
W

Fig. 13

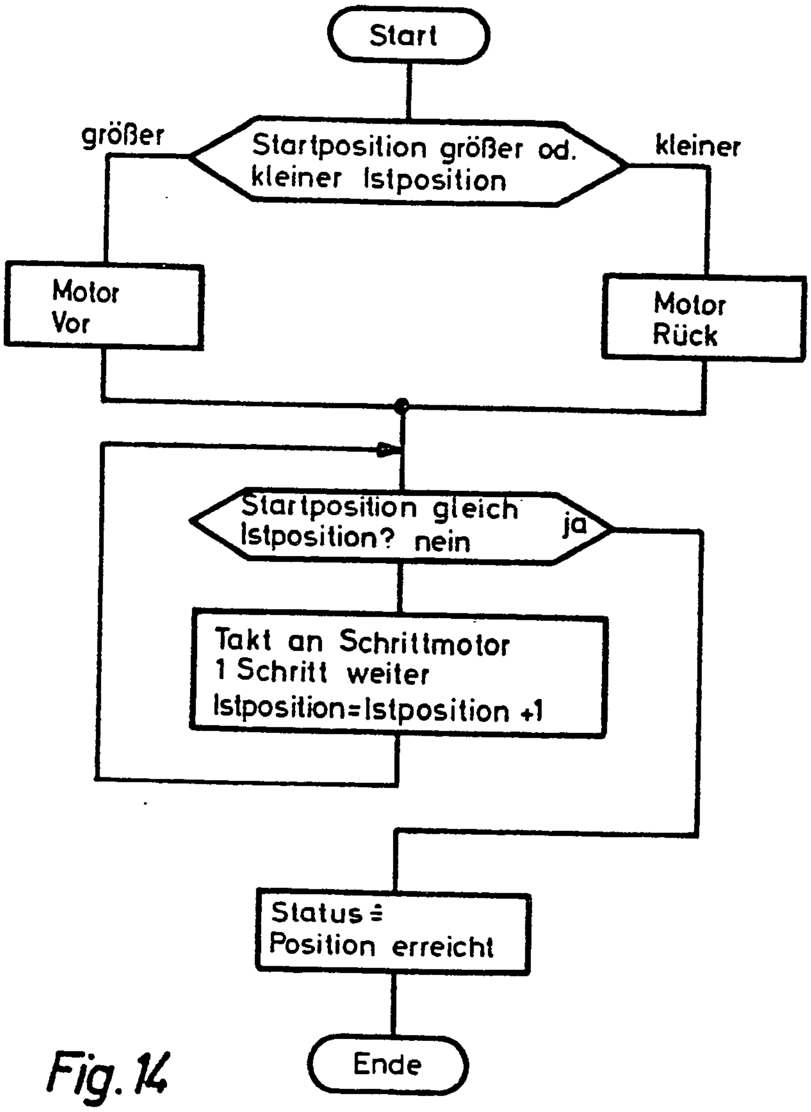
Start
größer
Startposition größer od. kleiner Istposition
kleiner
Motor Vor
Motor Rück
Startposition gleich Istposition? nein
ja
Takt an Schrittmotor
1 Schritt weiter
Istposition=Istposition +1
Status ≙
Position erreicht
Ende

Fig. 14

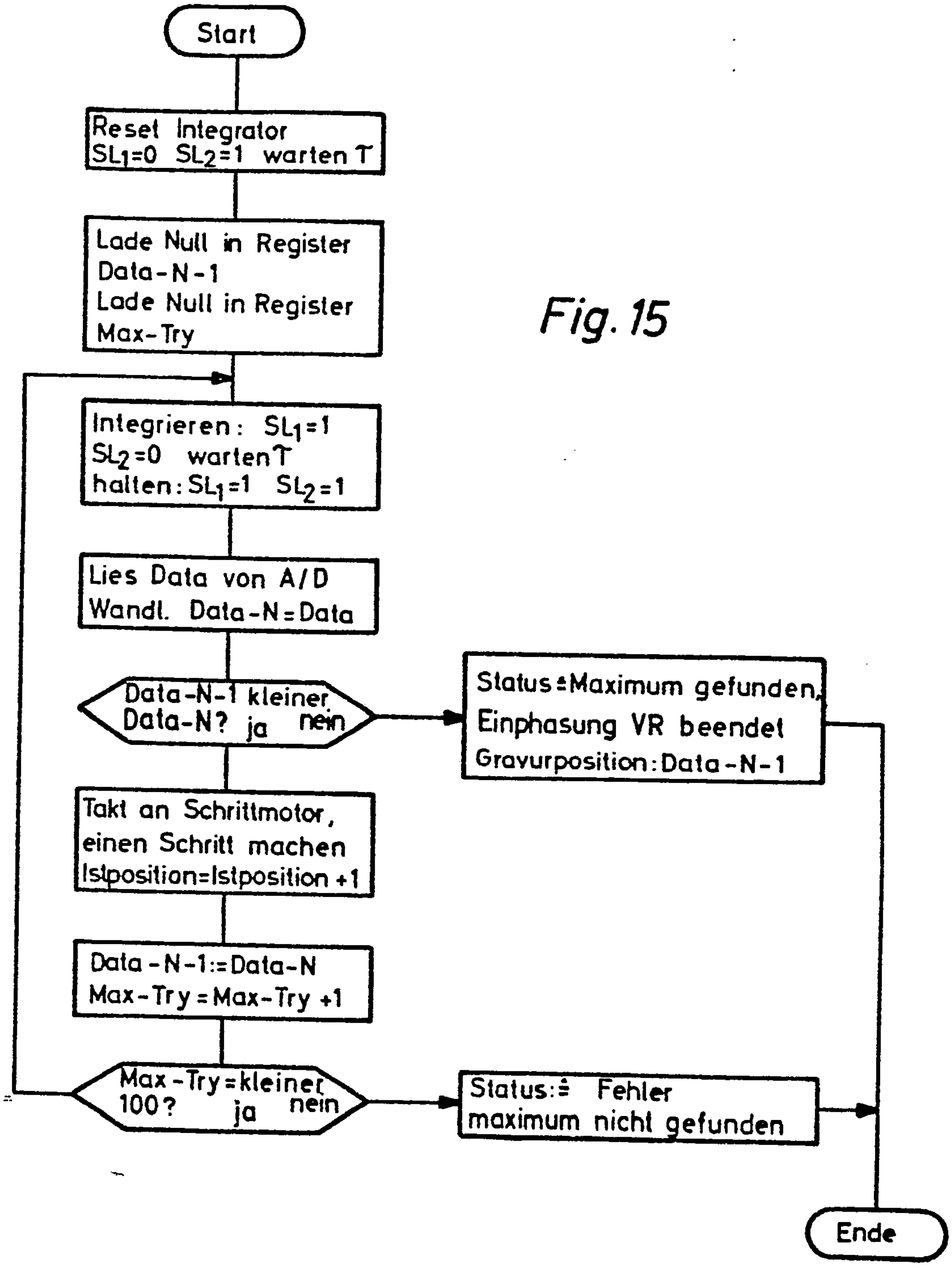
Start
Reset Integrator
SL1=0 SL2=1 warten T
Lade Null in Register
Data-N-1
Lade Null in Register
Max-Try
Integrieren: SL1=1
SL2=0 warten T
halten: SL1=1 SL2=1
Lies Data von A/D
Wandl. Data-N=Data
Data-N-1 kleiner
Data-N? ja nein
Status ≙ Maximum gefunden,
Einphasung VR beendet
Gravurposition: Data-N-1
Takt an Schrittmotor,
einen Schritt machen
Istposition=Istposition +1
Data-N-1:=Data-N
Max-Try=Max-Try +1
Max-Try=kleiner
100? ja nein
Status: ≙ Fehler
maximum nicht gefunden
Ende

Fig. 15

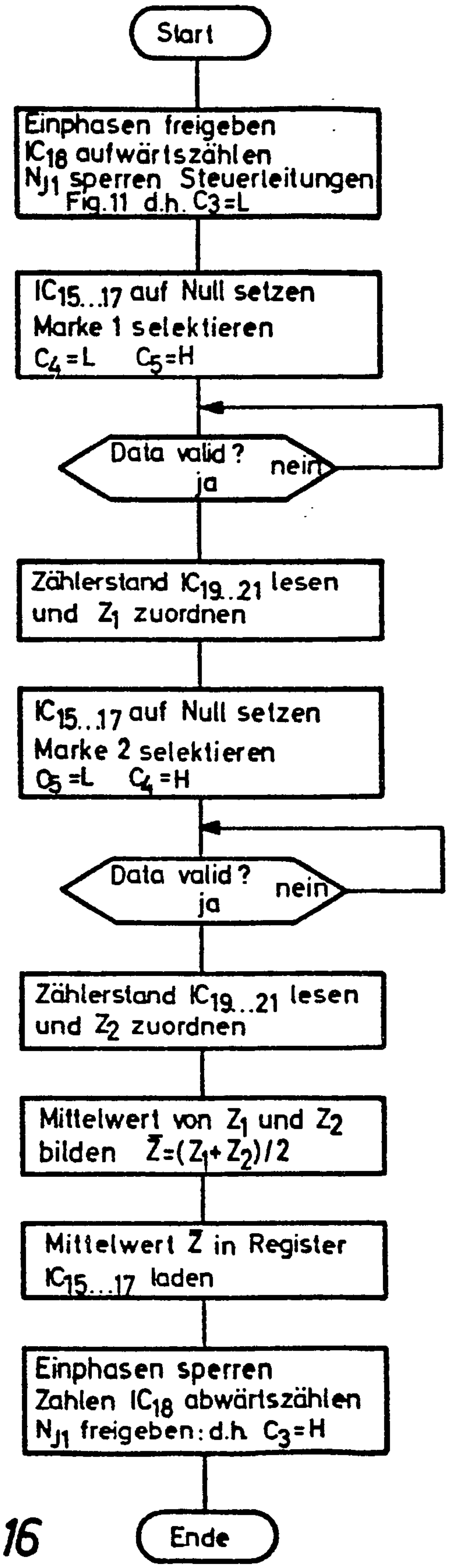
Start
Einphasen freigeben
IC18 aufwärtszählen
NJ1 sperren Steuerleitungen
Fig.11 d.h. C3=L
IC15...17 auf Null setzen
Marke 1 selektieren
C4=L C5=H
Data valid?
nein
ja
Zählerstand IC19...21 lesen
und Z1 zuordnen
IC15...17 auf Null setzen
Marke 2 selektieren
C5=L C4=H
Data valid?
nein
ja
Zählerstand IC19...21 lesen
und Z2 zuordnen
Mittelwert von Z1 und Z2
bilden Z̄=(Z1+Z2)/2
Mittelwert Z̄ in Register
IC15...17 laden
Einphasen sperren
Zahlen IC18 abwärtszählen
NJ1 freigeben: d.h. C3=H
Ende

Fig. 16